# EUROPEAN PATENT SPECIFICATION

(11) **EP 4 335 281 B1**
(45) Date of publication and mention of the grant of the patent: **09.04.2025**
(21) Application number: 23194116.2
(22) Date of filing: 29.08.2023
(51) Int. Cl.: A01D 41/14, A01D 69/03, F15B 21/0423

(54) **HYDRAULIC COOLER PRESSURE ISOLATION CIRCUIT FOR A HEADER OF AN AGRICULTURAL HARVESTER**
DRUCKISOLATIONSKREISLAUF EINES HYDRAULIKKÜHLERS FÜR EINEN ERNTEVORSATZ EINER LANDWIRTSCHAFTLICHEN ERNTEMASCHINE
CIRCUIT D'ISOLATION DE PRESSION D'UN REFROIDISSEUR HYDRAULIQUE POUR UNE TÊTE DE RÉCOLTE D'UNE RÉCOLTEUSE AGRICOLE

(30) Priority: 30.08.2022 US 202217899229
(43) Date of publication of application: 13.03.2024
(73) Proprietor: CNH Industrial America LLC, New Holland, PA 17557 (US)
(72) Inventor: TROWBRIDGE, Jeffrey, Stevens, 17578 (US)
(74) Representative: CNH Industrial IP Department

(56) References cited:
- US-A- 5 666 807
- US-B2- 10 260 824
- US-B2- 8 038 518
- US-B2- 9 717 179

## Description

The exemplary embodiments of the present invention relate generally to a header of an agricultural harvester and, in particular, to a hydraulic cooler pressure isolation circuit for an agricultural harvester header.

### BACKGROUND OF THE INVENTION

An agricultural harvester e.g., a plant cutting machine, such as, but not limited to, a combine or a windrower, generally includes a header operable for severing and collecting plant or crop material as the harvester is driven over a crop field. The header has a plant cutting mechanism, e.g., a cutter bar, for severing the plants or crops via, for example, an elongate sickle mechanism that reciprocates sidewardly relative to a non-reciprocating guard structure. A rotatable reel may extend across the header just above cutter bar which operates to feed the crop to the cutter bar for cutting. After crops are cut, they flow over crop ramps whereupon they are collected inside the header and transported via a conveyor such as a draper conveyor and/or auger conveyor towards a feederhouse located centrally inside the header.

The various movable components of an agricultural harvester header, e.g., cutter bar, conveyor, reel, etc. are oftentimes driven or moved by hydraulic motors and/or hydraulic cylinders that are located on the header. The hydraulic fluid used to operate the hydraulic motors and hydraulic cylinders is typically stored in a hydraulic fluid reservoir located on the agricultural harvester, which also is commonly equipped with a pump for delivering the hydraulic fluid from the reservoir through a supply line to a hydraulic circuit on the header. The header hydraulic circuit includes, among other things, the hydraulic motors, hydraulic cylinders, typically a hydraulic fluid cooler and a return filter, as well as return and drain lines for returning hydraulic fluid to the reservoir.

Hydraulic fluid coolers cannot normally withstand high pressures and, as such, are normally located on the low-pressure return line of hydraulic systems or circuits. A hydraulic fluid cooler on a combine header in which the hydraulic fluid is fully connected (i.e., the only reservoir in the system is on the combine) can experience possible high-pressure conditions due to the distance from the cooler to the reservoir and possible pressure drops along the way. Some of these pressure drops cannot be avoided, such as those occurring at the hydraulic coupler, necessary valves, return filter, etc. Excessive pressure can damage the hydraulic fluid cooler and cause external oil leaks in the hydraulic system resulting in downtime for the harvest and time and expense associated with repair of the hydraulic system.

US 5,666,807 A discusses, according to its abstract, an oil cooler circuit that includes a pilot operated valve disposed in a conduit connecting the hydraulic system to the cooler and an electromagnetic pilot valve connected to one end of the pilot operated valve. The pilot valve is spring biased to its closed position when the temperature of the oil is above a predetermined temperature and is moved to an open position when the oil temperature is at or below the predetermined temperature. The end is vented to a tank at the open position of the pilot valve so that the pilot operated valve is maintained at the closed position to prevent cold viscous oil from being transmitted to the oil cooler when the oil temperature is below the predetermined temperature.

US 10,260,824 B2 discusses, according to its abstract, a cooler bypass valve assembly for an agricultural implement that includes a cooler bypass valve configured to receive hydraulic fluid from a hydraulic supply. The cooler bypass valve position is adjustable between a first position that facilitates flow of the hydraulic fluid to a cooler bypass and restricts flow of the hydraulic fluid to a hydraulic fluid cooler, and a second position that blocks flow of the hydraulic fluid to the cooler bypass and facilitates flow of the hydraulic fluid to the hydraulic fluid cooler. The hydraulic fluid cooler is capable of reducing a temperature of the hydraulic fluid, and the cooler bypass directs the hydraulic fluid around the hydraulic fluid cooler. Additionally, the cooler bypass valve assembly includes a control assembly that controls the cooler bypass valve position based on the temperature of the hydraulic fluid.

US 8,038,518 B2 discusses, according to its abstract, an agricultural combine that includes a supporting structure. A work assembly is coupled to the supporting structure. The work assembly has a plurality of components to assist in the performing of crop processing operations. The work assembly is configured to define an air stream path. The work assembly has at least one rotary component that generates an air stream that flows through the air stream path to aid in crop processing in the work assembly. A fluid system is configured to circulate a fluid. The fluid system includes a fluid cooler that is positioned at a location in the air stream path to provide cooling of the fluid.

US 9,717,179 B2 discusses, according to its abstract, a hydraulic system for use with an agricultural harvester header. The hydraulic system includes a reversible hydraulic pump that drives a reversible hydraulic motor in a forward or harvesting direction and a reverse or header cleaning direction. The system can further include a second reversible pump similarly driving a second reversible hydraulic motor in forward and reverse directions. The pumps and motors can be used to operate various header implements, e.g., the first pump and motor may be used to operate at least a crop cutting knife and the second pump and motor can be used to operate at least one conveyor. The pumps and motors operate within hydraulic circuits which share their hydraulic fluid with the harvester's hydraulic fluid reservoir, thereby reducing system weight, complexity and maintenance requirements.

### SUMMARY OF THE INVENTION

In accordance with an exemplary embodiment, the present disclosure provides a hydraulic cooler pressure isolation circuit for a header of an agricultural harvester equipped with a hydraulic fluid reservoir and a pump. The hydraulic cooler pressure isolation circuit comprises a hydraulic fluid cooler, a supply line extending from the hydraulic fluid cooler for connecting to the pump of the harvester, a return line extending from the hydraulic fluid cooler for connecting to the reservoir of the harvester, and a drain line operatively in fluid communication with the supply line and the return line for connecting to the reservoir of the harvester. The hydraulic cooler pressure isolation circuit further comprises a first valve hydraulically connected to the supply line upstream the hydraulic fluid cooler, a return valve hydraulically connected to the return line downstream the hydraulic fluid cooler, a bypass valve hydraulically connected to the supply line upstream the first valve and to the return line downstream the return valve, and a second valve hydraulically connected to the return line downstream the hydraulic fluid cooler and upstream the return valve and operatively in fluid communication with the drain line.

According to an aspect, during normal operation of the hydraulic cooler pressure isolation circuit, the first valve and the return valve are open, and the bypass valve, the pressure valve and the second valve are closed, whereby hydraulic fluid passes through the supply line from the pump, through the first valve to the hydraulic fluid cooler and passes through the return line from the hydraulic fluid cooler through the return valve to the reservoir.

According to another aspect, during operation of the hydraulic cooler pressure isolation circuit to isolate the hydraulic fluid cooler from high pressure hydraulic fluid, the hydraulic cooler pressure isolation circuit operates according to the following steps: (1) the first valve closes, the bypass valve opens, and the return valve closes in response to a threshold pilot pressure at an outlet port of the first valve, whereby hydraulic fluid bypasses the hydraulic fluid cooler through the open bypass valve and the return line downstream the closed return valve and flows to the reservoir, and (2) the second valve opens at a higher pilot pressure than the threshold pilot pressure that closes the first valve, whereby high pressure hydraulic fluid within the hydraulic fluid cooler is directed through the open second valve, passes through the drain line and flows to the reservoir.

Other features and advantages of the subject disclosure will be apparent from the following more detailed description of the exemplary embodiments.

### BRIEF DESCRIPTION OF THE DRAWINGS

The foregoing summary, as well as the following detailed description of the exemplary embodiments of the subject disclosure, will be better understood when read in conjunction with the appended drawings. For the purpose of illustrating the subject disclosure, there are shown in the drawings exemplary embodiments. It should be understood, however, that the subject disclosure is not limited to the precise arrangements and instrumentalities shown. In the drawings:
FIG. 1 is a top plan view of an agricultural harvester including a header equipped with hydraulically operated components suitable for use with a header hydraulic cooler pressure isolation circuit in accordance with the subject disclosure;
FIG. 2 is a schematic view of a first exemplary embodiment of a hydraulic cooler pressure isolation circuit for a header of an agricultural harvester in accordance with the subject disclosure fluidly coupled to a reservoir and a pump carried by an agricultural harvester;
FIG. 3 is a schematic view of the first exemplary embodiment of a hydraulic cooler pressure isolation circuit for a header of an agricultural harvester showing normal operation of the circuit;
FIG. 4 is a schematic view of the first exemplary embodiment of a hydraulic cooler pressure isolation circuit for a header of an agricultural harvester showing the function of bypass valve to protect a hydraulic fluid cooler in the circuit;
FIG. 5 is a schematic view of the first exemplary embodiment of a hydraulic cooler pressure isolation circuit for a header of an agricultural harvester showing how the hydraulic fluid cooler in the circuit is isolated from potentially damaging pressure in the system;
FIG. 6 is a schematic view of a second exemplary embodiment of a hydraulic cooler pressure isolation circuit for a header of an agricultural harvester in accordance with the subject disclosure fluidly coupled to a reservoir and a pump carried by an agricultural harvester;
FIG. 7 is a schematic view of the second exemplary embodiment of a hydraulic cooler pressure isolation circuit for a header of an agricultural harvester showing normal operation of the circuit;
FIG. 8 is a schematic view of the second exemplary embodiment of a hydraulic cooler pressure isolation circuit for a header of an agricultural harvester showing a first step in isolating a hydraulic fluid cooler in the circuit;
FIG. 9 is a schematic view of the second exemplary embodiment of a hydraulic cooler pressure isolation circuit for a header of an agricultural harvester showing a second step in isolating the hydraulic fluid cooler in the circuit;
FIG. 10 is a schematic view of a third exemplary embodiment of a hydraulic cooler pressure isolation circuit for a header of an agricultural harvester in accordance with the subject disclosure fluidly coupled to a reservoir and a pump carried by an agricultural harvester;
FIG. 11 is a schematic view of the third exemplary embodiment of a hydraulic cooler pressure isolation circuit for a header of an agricultural harvester showing normal operation of the circuit;
FIG. 12 is a schematic view of the third exemplary embodiment of a hydraulic cooler pressure isolation circuit for a header of an agricultural harvester showing a first step in isolating a hydraulic fluid cooler in the circuit; and
FIG. 13 is a schematic view of the third exemplary embodiment of a hydraulic cooler pressure isolation circuit for a header of an agricultural harvester showing a second step in isolating the hydraulic fluid cooler in the circuit.

### DETAILED DESCRIPTION OF THE DRAWINGS

Reference will now be made in detail to the various exemplary embodiments of the subject disclosure illustrated in the accompanying drawings.

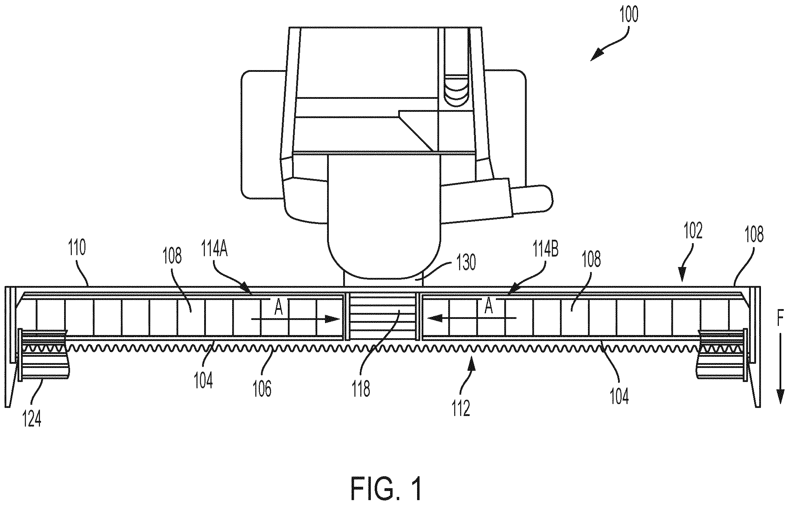

Referring to FIG. 1, a representative agricultural harvester 100, which, e.g., may be a combine harvester, is shown. The harvester includes a draper header 102 incorporating a cut crop barrier interface or crop ramp 104 according to the subject disclosure disposed between an elongate sidewardly extending cutter bar 106 and an elongate, sidewardly extending, endless belt draper conveyor 108 of the header 102.

The header 102 comprises a frame 108, a portion of which is shown extending forwardly from a rear support frame structure 110 to the cutter bar 106. The frame 108 can have a variety of forms, but will generally comprise a chassis-like structure for supporting an elongate sidewardly extending cutter bar assembly 112 comprising the cutter bar 106, as well as at least one elongate sidewardly extending draper assembly comprising the draper conveyor 108, and other aspects of the header.

As illustrated, the header 102 includes two draper assemblies 114A, 114B operable for conveying cut crop convergingly to a central conveyor 118, as generally denoted by arrows A, as the harvester moves in a forward direction denoted by arrow F through a field while cutting the crops. The central conveyor 118, in turn, conveys the cut crop into a feederhouse 130 of the harvester 100, which conveys the crop into the harvester for threshing and separation of crop therefrom.

The cutter bar assembly 112 generally includes a sideward, longitudinally extending knife guard having a plurality of forward projecting fingers. The cutter bar assembly 112 carries an elongate sickle comprised of knife sections which are sidewardly reciprocated through and relative to the fingers for cutting crop as the harvester moves in forward direction F. A reel 124 extends across the header just above cutter bar assembly 112, and operates to feed the crop to the cutter bar for cutting.

Although not illustrated in FIG. 1, it will be understood by those of ordinary skill in the art that the header includes motors, e.g., hydraulic motors, for operating the cutter bar 106, draper conveyors 108, central conveyor 118 and reel 124, as well as extensible and retractable members, e.g., hydraulic cylinders, for raising and lowering the reel 124 and, possibly, the cutter bar.

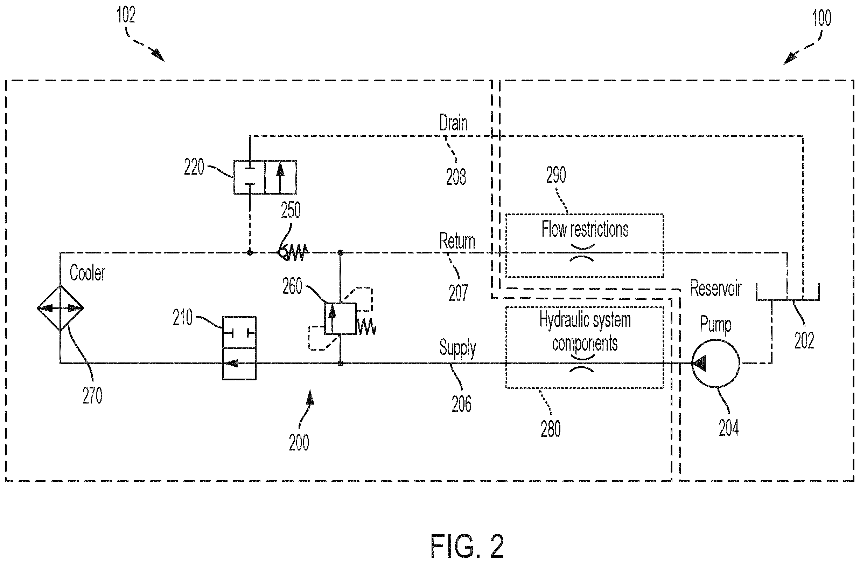

Referring to FIG. 2, there is schematically shown a first exemplary embodiment of a hydraulic cooler pressure isolation circuit 200 for the header 102 of the agricultural harvester 100 according to the subject disclosure. The hydraulic cooler pressure isolation circuit 200 comprises a hydraulic fluid cooler 270, and the agricultural harvester 100 is equipped with a hydraulic fluid reservoir 202 and a pump 204. The agricultural harvester 100 and the header 102 share a supply line 206, a return line 207 and a drain line 208. The supply line 206 extends from the hydraulic fluid cooler for connecting to the pump of the agricultural harvester. The return line 207 extends from the hydraulic fluid cooler for connecting to the hydraulic fluid reservoir of the agricultural harvester. The drain line 208 is operatively in fluid communication with the supply line 206 and the return line 207 for connecting to the hydraulic fluid reservoir of the agricultural harvester.

The hydraulic cooler pressure isolation circuit 200 further comprises a first valve 210 hydraulically connected to the supply line 206 upstream the hydraulic fluid cooler 270, a return valve 250 hydraulically connected to the return line 207 downstream the hydraulic fluid cooler, a bypass valve 260 hydraulically connected to the supply line upstream the first valve 210 and to the return line downstream the return valve, and a second valve 220 hydraulically connected to the return line downstream the hydraulic fluid cooler and upstream the return valve 250 and operatively in fluid communication with the drain line. For simplicity of illustration, FIGS. 2-5 do not show control mechanisms for the first valve 210 and the second valve 220 such as solenoid coils, manual levers, or pilot lines to shift the valve spools to desired positions, as well as biasing springs for urging the valves to the default (closed) position. Such control mechanisms and biasing springs are known by those skilled in the art of hydraulic systems and are shown in later figures herein.

The header 102 further includes conventional hydraulic system components 280 in the supply line 206. Such hydraulic system components can include, e.g., a manifold valve to control fluid flow and/or direction to actuators such as motors used to operate various mechanisms, e.g. cutter bar 106, draper conveyors 108, central conveyor 118 and reel 124 and hydraulic cylinders to provide linear movement as needed to the reel 124 and, possibly, the cutter bar.

In addition, the agricultural harvester 100 typically includes flow restrictions 290 in the return line 207. Such flow restrictions can include quick couplers that allow the header to be hydraulically attached to and removed from the agricultural harvester, a manifold valve to control fluid flow and/or direction (which may be used for reverse flow to the header to facilitate deslug mode), a return filter to clean oil from harmful contamination, and flow lines (including hoses, tubes and fittings). As for the quick couplers, increased coupler size decreases pressure drop but increases cost and weight. With regard to the return filter, larger filter size decreases pressure drop but increases cost, space consumption and weight. Regarding the flow lines, larger line size is generally better in that larger internal diameter results in less pressure drop, although larger line sizes increase cost and space consumption. Additionally, longer flow line distances increase pressure drop (for a header, the distance to the combine reservoir can be significant, e.g., over 40 feet). Further, fewer fittings are preferred but not always practical.

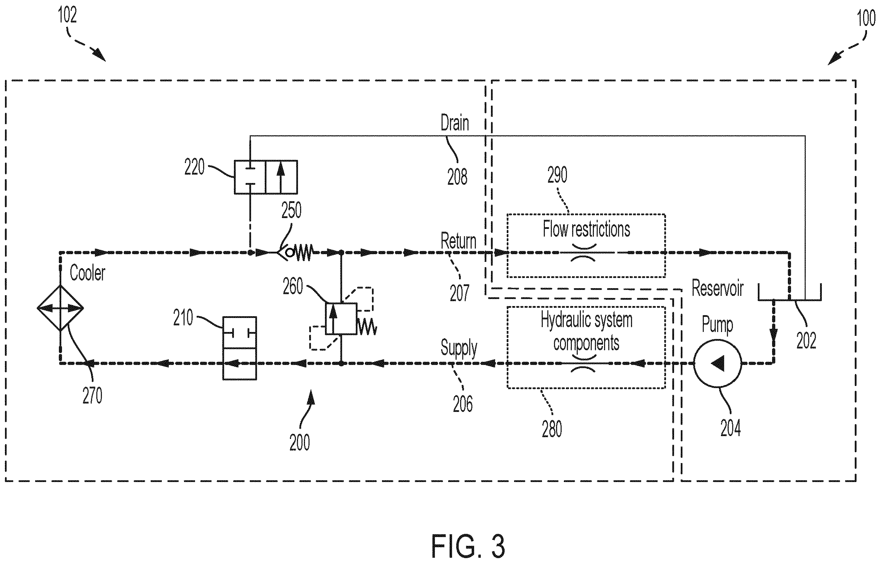

Referring to FIG. 3, there is schematically shown the hydraulic cooler pressure isolation circuit 200 under normal operating conditions, i.e., during machine operation in which the back pressure in the return line 207 (caused by flow restrictions) is sufficiently low as to not present any danger to the hydraulic fluid cooler 270. In this state, the first valve 210 and the return valve 250 are open, and the bypass valve 260 and the second valve 220 are closed. The bypass valve 260 remains closed as long as the combined pressure drop across the first valve 210 plus the pressure drop across the cooler 270 is less than the spring setting of the bypass valve. Additionally, the second valve 220 remains closed to prevent excessive flow through the drain line 208 which can cause damage to other unillustrated components such as motor/pump shaft seals which would normally be connected to the same drain line. Under normal operating conditions, hydraulic fluid passes through the supply line 206 from the pump 204, through the first valve 210 to the hydraulic fluid cooler 270 and passes through the return line 207 from the hydraulic fluid cooler through the return valve 250 to the reservoir 202.

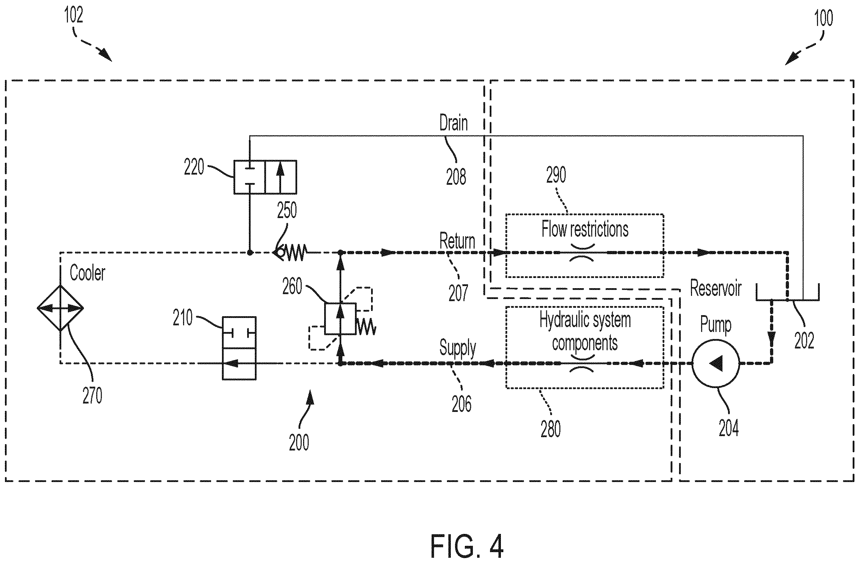

Referring to FIG. 4, there is schematically shown the hydraulic cooler circuit 200 as it would appear in the event of an unintentional blockage at the cooler (due, for instance, to debris in the hydraulic fluid oil) that causes a high-pressure restriction which can damage the cooler. In this case, valves 210 and 220 remain in their respective default positions while bypass valve 260 opens. As a result, hydraulic fluid bypasses the hydraulic fluid cooler 270 through the open bypass valve 260 and the return line 207 downstream the closed return valve 250 and flows to the reservoir 202.

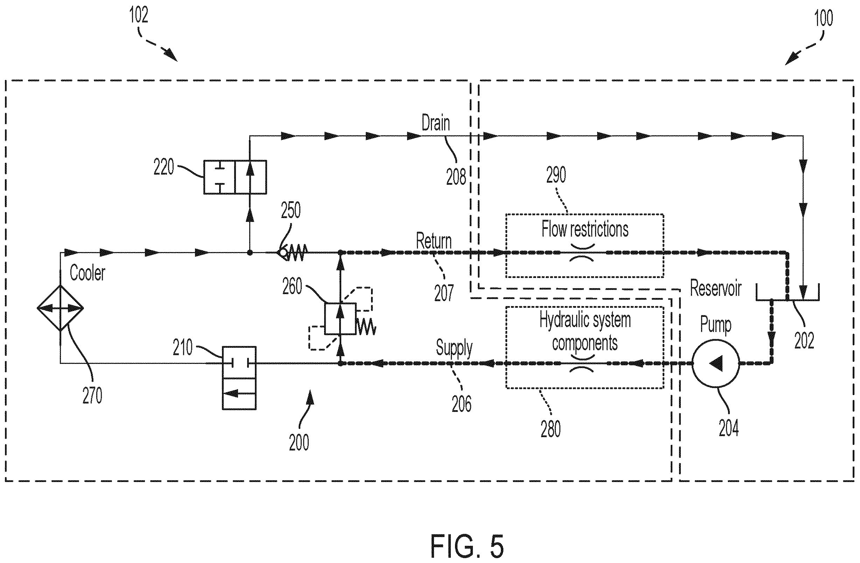

Referring to FIG. 5, there is schematically shown the hydraulic cooler pressure isolation circuit 200 as it would appear when hydraulically isolating the hydraulic fluid cooler 270 in accordance with the subject disclosure. Such configuration is intended to occur if the return flow back pressure is sufficiently high to possibly cause structural damage to the cooler. According to this case, the first valve 210 closes, the bypass valve 260 opens, and the return valve 250 closes, whereby hydraulic fluid bypasses the hydraulic fluid cooler through the open bypass valve 260 and the return line downstream the closed return valve 250 and flows to the reservoir. In other words, the first valve 210 closes to force all the oil flow though the bypass valve 260. In addition, after the first valve 210 closes, the second valve 220 opens at a back pressure in the return line that exceeds a predetermined value to allow any residual pressure in the cooler to dissipate through the low pressure drain line 208 and flow to the reservoir 202. The result is the hydraulic fluid cooler 270 is protected from potentially damaging high pressure, whereby costly downtime and repairs to the cooler are avoided. FIG. 5 also represents the state of the hydraulic cooler pressure isolation circuit 200 wherein high pressure is experienced at the cooler that is normally associated with starting the machine with cold oil which has a high viscosity. Once the hydraulic fluid (oil) warms up, the system assumes the normal operating condition flow path shown in FIG. 3.

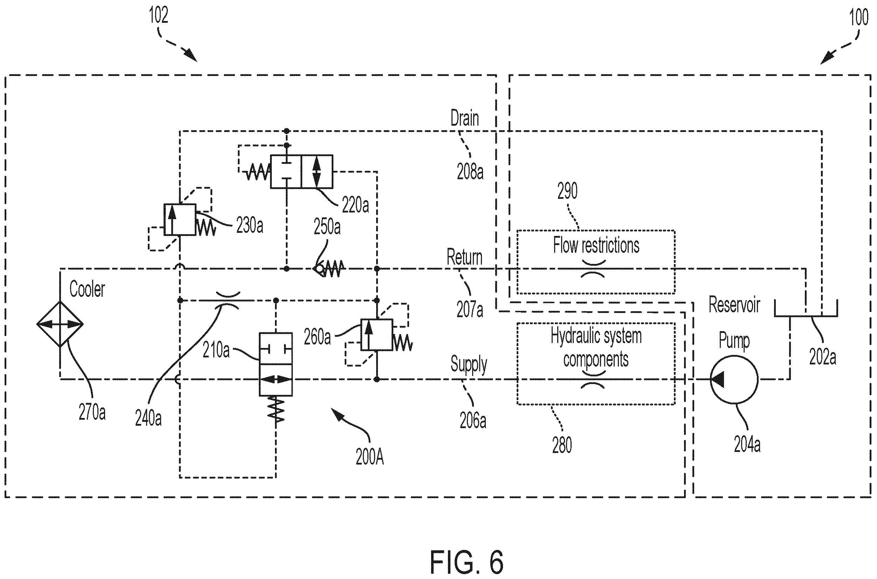

Referring to FIG. 6, there is schematically shown a second exemplary embodiment of a hydraulic cooler pressure isolation circuit 200A for the header 102 of the agricultural harvester 100 according to the subject disclosure. The hydraulic cooler pressure isolation circuit 200A comprises a hydraulic fluid cooler 270a, and the agricultural harvester 100 is equipped with a hydraulic fluid reservoir 202a and a pump 204a. The agricultural harvester 100 and the header 102 share a supply line 206a, a return line 207a and a drain line 208a. The supply line 206a extends from the hydraulic fluid cooler for connecting to the pump of the agricultural harvester. The return line 207a extends from the hydraulic fluid cooler for connecting to the hydraulic fluid reservoir of the agricultural harvester. The drain line 208a is operatively in fluid communication with the supply line 206a and the return line 207a for connecting to the hydraulic fluid reservoir of the agricultural harvester.

The hydraulic cooler pressure isolation circuit 200A further comprises a first valve 210a hydraulically connected to the supply line 206a upstream the hydraulic fluid cooler 270a, a return valve 250a hydraulically connected to the return line 207a downstream the hydraulic fluid cooler, a bypass valve 260a hydraulically connected to the supply line upstream the first valve 210a and to the return line downstream the return valve, and a second valve 220a hydraulically connected to the return line downstream the hydraulic fluid cooler and upstream the return valve 250a and operatively in fluid communication with the drain line.

The hydraulic cooler pressure isolation circuit 200A further comprises a pressure valve 230a hydraulically connected to the drain line 208a and operatively in fluid communication with the first valve 210a, and a third valve 240a operatively in fluid communication with the first valve 210a, the bypass valve 260a, the second valve 220a and the pressure valve 230a. According to exemplary, non-limiting aspects, the first valve 210a and the second valve 220a can be two-position, two-port spool valves, the bypass valve 260a and the pressure valve 230a can be differential pressure relief valves, the return valve 250a can be a check valve, and the third valve 240a can be an orifice valve (which may be controlled, e.g., by a set screw).

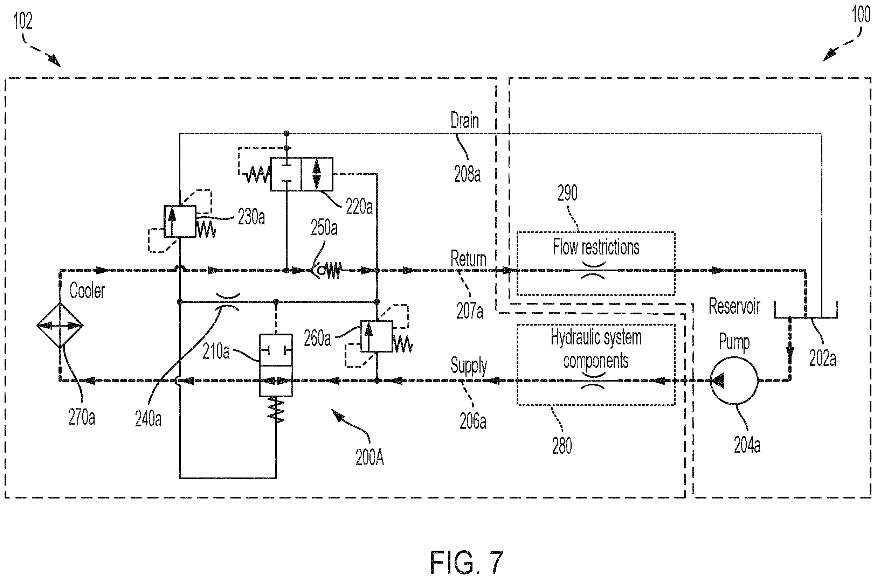

Referring to FIG. 7, there is schematically shown the hydraulic cooler pressure isolation circuit 200A under normal operating conditions. In this state, the first valve 210a, the return valve 250a and the third valve 240a are open, and the bypass valve 260a, the pressure valve 230a and the second valve 220a are closed, whereby hydraulic fluid passes through the supply line 206a from the pump 204a, through the first valve 210a to the hydraulic fluid cooler 270a and passes through the return line 207a from the hydraulic fluid cooler through the return valve 250a to the reservoir 202a.

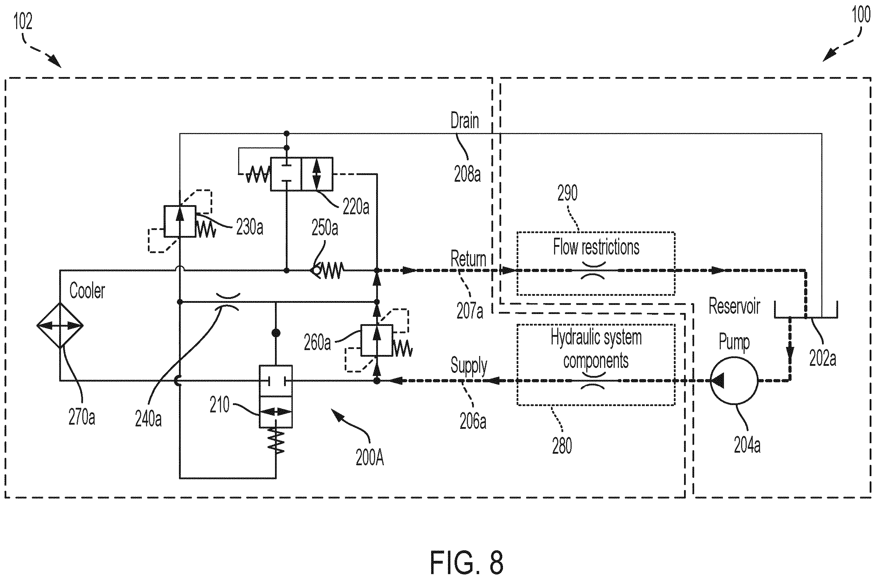

Referring to FIG. 8, there is schematically shown the hydraulic cooler pressure isolation circuit 200A as it would appear when performing a first step in hydraulically isolating the hydraulic fluid cooler 270a in accordance with the subject disclosure. According to this first step, as the backpressure at line 207a increases, the pressure in the pilot lines to valve 210a and inlet to valve 230a increase accordingly. Once this pressure exceeds the bias spring pressure of 230a, oil begins to flow across orifice 240a. When the pressure drop across 240a exceeds the bias spring setting of valve 210a, then valve 210a shifts to the closed position as shown in FIG. 8. At this point in time, the bypass valve 260a opens due to the increased pressure at the inlet of valve 210a. The oil flow now bypasses the cooler 270a. With no oil flowing through the cooler, valve 250a closes with the force of the associated bias spring. As a result, hydraulic fluid bypasses the hydraulic fluid cooler 270a through the open bypass valve 260a and continues to the return line 207a downstream the closed return valve 250a and flows to the reservoir 202a. In addition, a lesser portion of the hydraulic fluid flows through the pressure valve 230a into the drain line 208a whereupon it flows to the reservoir. The flow rate through 230a is intentionally minimized by properly sizing orifice 240a. During the normal operating condition as show in FIG. 7, there is no flow across orifice 240a and therefore the pressure drop is zero. This allows equal pressure to be applied to both ends of spool valve 210a which causes the associated bias spring to take precedence and shift valve 210a to the default position which is normally open.

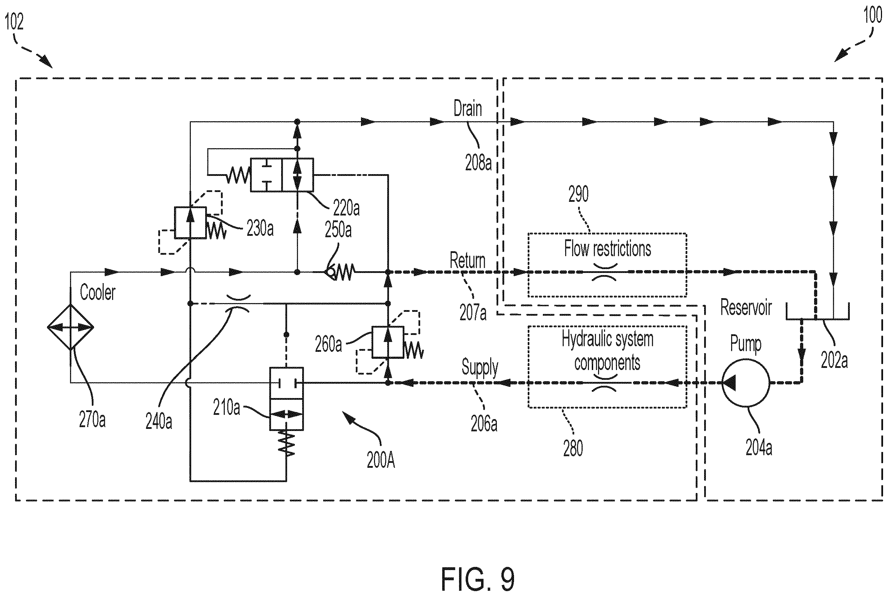

Referring to FIG. 9, there is schematically shown the hydraulic cooler pressure isolation circuit 200A as it would appear when performing a second step in hydraulically isolating the hydraulic fluid cooler 270a in accordance with the subject disclosure. According to this second step, the second valve 220a opens at a higher pilot pressure than the threshold pilot pressure that closes the first valve 210a, whereby high pressure hydraulic fluid within the hydraulic fluid cooler 270a is directed through the open second valve 220a, passes through the drain line 208a and flows to the reservoir 202a.

The following describes the sequence of operation of a computer simulation of the hydraulic cooler pressure isolation circuit 200A from hydraulic system startup through normal operating conditions.

First, at startup (0 sec), the hydraulic oil temperature is arbitrarily set at 0 degrees C (32 degrees F) to simulate a cold ambient startup condition and the flow from pump 204a is initially at 0 lpm. Once the agricultural harvester starts up and its hydraulic system is activated, the pump flow through the hydraulic fluid cooler 270a increases quickly and, correspondingly, the back pressure (return line pressure) climbs due to the resistance (high viscosity) of the oil flow back to the reservoir. The hydraulic fluid flow path for this very brief time is illustrated on FIG. 7.

Second, once the system back pressure reaches the set point (spring setting) of the 230a and oil is flowing through orifice 240a, a pressure drop is induced across the orifice. Then this pressure drop exceeds the spring setting of first valve 210a, this valve shifts position to close off flow through the hydraulic fluid cooler 270a (i.e., cooler flow is 0 lpm). This occurs at approximately 2 seconds after startup. At this point, full pump flow is bypassing the cooler through the bypass valve 260a as shown in FIG. 8.

Third, about 1 second later, the next event to occur is the result of quickly rising back pressure in the return line which causes the second valve 220a to shift once the back pressure in the return line exceeds the spring setting of the second valve. This causes the pressure in the hydraulic fluid cooler 270a to drop significantly to protect the cooler from over-pressurization. It should be noted that the second valve 220a shifts at a higher pressure than the first valve 210a in order to prevent excessive flow through the drain line which can cause damage to other components (not shown in the diagrams) such as motor/pump shaft seals which would normally be connected to the same drain line.

Fourth, from about 3 to about 29 seconds, due to the high back pressure in the return line, the oil temperature naturally rises. The system back pressure will peak (in this case at approximately 70 bar or 7,000,000 pascals) then begin to drop as the oil warms up and the viscosity decreases. This mode is shown in FIG. 9.

Fifth, once the system back pressure in the return line drops below the setting of the second valve 220a, this valve shifts back to its spring-applied position which causes the pressure in the hydraulic fluid cooler 270a to build and match the system back pressure in the return line 207a. Thereafter, pressure in the hydraulic fluid cooler 270a and the return line decrease together as the oil viscosity decreases with increased oil temperature. At this time, which occurs from about 30 to 62 seconds, the system is configured like that shown in FIG. 8 and the back pressure is low enough as to not cause damage to the cooler.

Sixth, when the system back pressure in the return line is below the threshold of the valve 230a, this valve closes and flow through 240a stops. This the pilot pressure at both ends of valve 210a to be equal which results in the first valve shifting to its default (spring-applied) position which allows the pump flow to be directed through the hydraulic fluid cooler 270a. This transition takes place between about 63 to 72 seconds after system startup. Once the transition is completed, the full pump flow (approximately 34 lpm) goes through the hydraulic system cooler from about 73 seconds and beyond. This mode is shown in FIG. 7. At this point, the oil temperature continues to rise and the system back pressure in the return line decreases to some minimum value. When the oil temperature is sufficiently high (80 degrees C, for example), the hydraulic fluid cooler fan will turn on to provide cooling as needed to stabilize the system to a desired temperature.

The second exemplary embodiment of the hydraulic cooler pressure isolation circuit 200A as illustrated in figures 6-9 does not rely on any external controls (sensors, software, electronic controls, etc.) for its operation. Instead, it uses the direct return fluid pressure itself to shift the various valves and alter the flow of the hydraulic fluid (oil) in order to protect the hydraulic fluid cooler from excessive pressure.

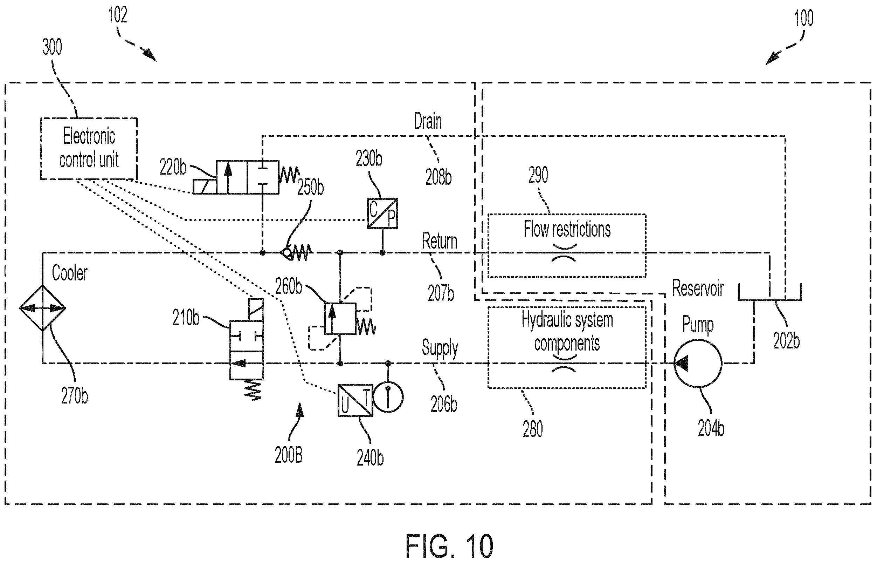

Referring to FIG. 10, there is schematically shown a third exemplary embodiment of a hydraulic cooler pressure isolation circuit 200B for the header 102 of the agricultural harvester 100 according to the subject disclosure. The hydraulic cooler pressure isolation circuit 200B comprises a hydraulic fluid cooler 270b, and the agricultural harvester 100 is equipped with a hydraulic fluid reservoir 202b and a pump 204b. The agricultural harvester 100 and the header 102 share a supply line 206b, a return line 207b and a drain line 208b. The supply line 206b extends from the hydraulic fluid cooler for connecting to the pump of the agricultural harvester. The return line 207b extends from the hydraulic fluid cooler for connecting to the hydraulic fluid reservoir of the agricultural harvester. The drain line 208b is operatively in fluid communication with the supply line 206b and the return line 207b for connecting to the hydraulic fluid reservoir of the agricultural harvester.

The hydraulic cooler pressure isolation circuit 200B further comprises a first valve 210b hydraulically connected to the supply line 206b upstream the hydraulic fluid cooler 270b, a return valve 250b hydraulically connected to the return line 207b downstream the hydraulic fluid cooler, a bypass valve 260b hydraulically connected to the supply line upstream the first valve 210b and to the return line downstream the return valve, and a second valve 220b hydraulically connected to the return line downstream the hydraulic fluid cooler and upstream the return valve 250b and operatively in fluid communication with the drain line. According to this exemplary embodiment, the hydraulic cooler pressure isolation circuit 200B further comprises a temperature sensor 240b that senses a temperature of hydraulic fluid in the supply line 206b (preferably upstream the first valve 210b and upstream of the inlet to valve 260b), and a pressure sensor 230b that senses pressure in the return line 207b (preferably downstream return valve 250b).

The first and second valves 210b and 220b according to this exemplary embodiment are spring-biased solenoid valves. As such, the spool positions of the first and second valves are determined by a bias spring and a solenoid coil. If power to a solenoid coil is off, the spool position is determined by the bias spring. For example, the first valve 210b is normally open since the bias spring of the valve forces the spool into the open position.

An electronic control unit (ECU) 300 receives power via an unillustrated electrical connection to the electrical system of the agricultural harvester 100 and may be carried by the agricultural harvester or the header. The ECU employs software program logic combined with signals provided by the temperature sensor 240b and the pressure sensor 230b to power the solenoid coils of the first and second valves 210b and 220b. For example, if the oil temperature in the supply line 206b as sensed by the temperature sensor 240b is low, it can be assumed no cooling is needed and the oil can bypass the hydraulic fluid cooler 270b. The exact temperature at which oil bypasses the cooler is determined by the software program and can be easily adjusted. Similarly, if the back pressure in the return line 207b as sensed by the pressure sensor 230b is elevated above a predetermined threshold, then action can be taken by the ECU 300 to protect the hydraulic fluid cooler, as described below.

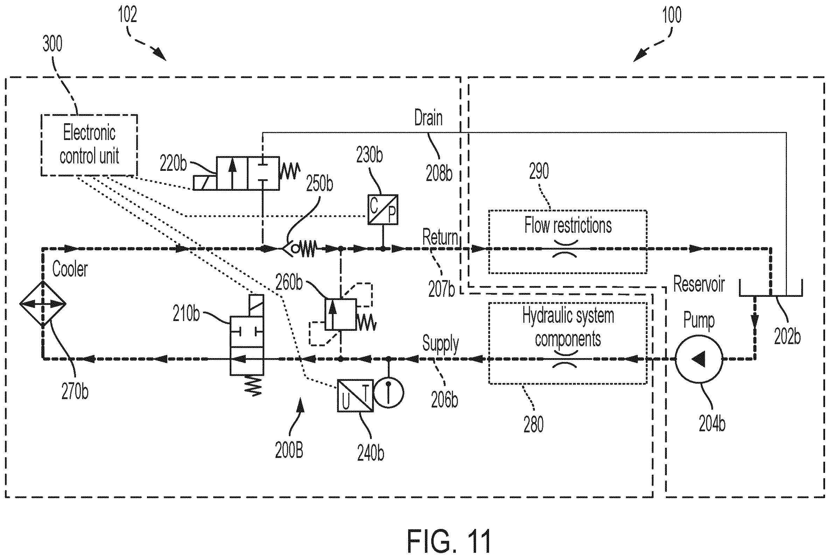

Referring to FIG. 11, there is schematically shown the hydraulic cooler pressure isolation circuit 200B under normal operating conditions, i.e., during machine operation in which the back pressure in the return line 207b (caused by flow restrictions) is sufficiently low as to not present any danger to the hydraulic fluid cooler 270b. In this state, the first valve 210b and the return valve 250b are open, and the bypass valve 260b and the second valve 220b are closed. The bypass valve 260b remains closed as long as the combined pressure drop across the first valve 210b plus the pressure drop across the cooler 270b is less than the spring setting of the bypass valve. Additionally, the second valve 220b remains closed to prevent excessive flow through the drain line 208b which can cause damage to other unillustrated components such as motor/pump shaft seals which would normally be connected to the same drain line. Under normal operating conditions, hydraulic fluid passes through the supply line 206b from the pump 204b, through the first valve 210b to the hydraulic fluid cooler 270b and passes through the return line 207b from the hydraulic fluid cooler through the return valve 250b to the reservoir 202b.

If an unintentional blockage occurs at the hydraulic fluid cooler 270b (for example, due to debris in the oil), bypass valve 260b opens to provide a path for the oil to return to the reservoir 202b and prevent damage to the cooler. Although not illustrated in FIGS. 11-13, the same general concept is illustrated in FIG. 4.

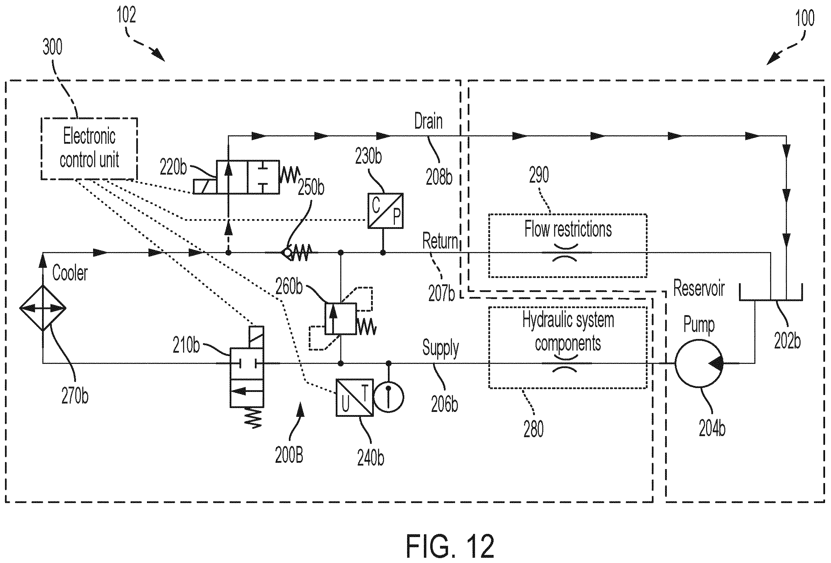

If a machine, i.e., agricultural harvester and header, is in a cold ambient condition with the oil having a correspondingly high viscosity, flow in the system can result in high back pressure which could immediately damage to the cooler if not handled properly. FIG 12 illustrates the situation where temperature sensor 240b sends the low oil temperature data to the ECU which processes this information and immediately sends power to the solenoid coils of the first and second valves 210b and 220b, whereby no oil is yet flowing to the cooler and any residual pressure at the cooler is dissipated through the second valve to the drain line 208b. The ECU commands thus carried out prepare the system for a safe startup by isolating the cooler from the impending high back pressure which will occur once the cold high viscosity oil starts flowing

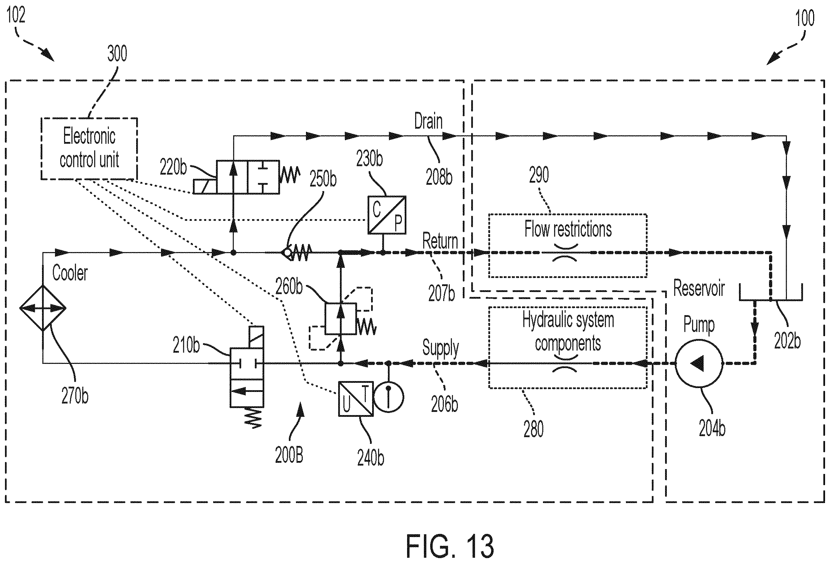

Referring to FIG. 13, once the cold high viscosity oil begins flowing, the closed first valve 210b creates back pressure in the supply line 206b sufficient to overcome the spring bias of the bypass valve 260b, whereby all flow is diverted through the bypass valve and the pressure in the cooler is the same as that of the drain line 208b. Thus, the hydraulic fluid cooler 270b is protected from damage.

Once the oil warms up to a predetermined level as sensed by the temperature sensor 240b, the ECU switches off power to the solenoid coils of the first and second valves 210b and 220b, and the oil flow reverts to the normal flow path as shown in FIG. 11. In the transition from the state of the hydraulic cooler pressure isolation circuit 200B shown in FIG. 13 to that shown in FIG. 11, the second valve 220b shifts to the default (closed) position before the first valve 210b shifts to the default (open) position under control of the ECU. This is necessary in order to prevent excessive flow through the drain line 208b which can cause damage to other unillustrated components such as motor/pump shaft seals which would normally be connected to the same drain line.

During normal machine operation (FIG. 11), the system back-pressure in the return line 207b is constantly measured by the pressure sensor 230b and this data is monitored by the ECU. If the back-pressure becomes elevated above a critical threshold level, the ECU can switch on power to the solenoid coils of the first and second valves 210b and 220b in order to protect the cooler 270b. The result is shown in FIG. 13. However, in transitioning from the system arrangement shown in FIG. 11 to that of FIG. 13, the first valve 210b shifts to the blocked or closed position (power-on) before the second valve 220b shifts to the open position (power-on) under control of the ECU. This is necessary in order to prevent excessive flow through the drain line 208b which can cause damage to other unillustrated components connected to the drain line, as described above. Therefore, although the reason for specifically controlling the order of opening and closing the first and second valves is the same, the sequence of operations is opposite depending on the direction of transition, i.e., from that shown in FIG. 13 to that shown in FIG. 11 as compared to that shown in FIG. 11 to that shown in FIG. 13.

## Claims

1. A hydraulic cooler pressure isolation circuit (200, 200A, 200B) for a header (102) of an agricultural harvester (100) equipped with a hydraulic fluid reservoir (202, 202a, 202b) and a pump (204, 204a, 204b), the hydraulic cooler pressure isolation circuit comprising:
a hydraulic fluid cooler (270, 270a, 270b);
a supply line (206, 206a, 206b) extending from the hydraulic fluid cooler for connecting to the pump of the harvester;
a return line (207, 207a, 207b) extending from the hydraulic fluid cooler for connecting to the reservoir of the harvester;
a first valve (210, 210a, 210b) hydraulically connected to the supply line upstream the hydraulic fluid cooler;
a bypass valve (260, 260a, 260b) hydraulically connected to the supply line upstream the first valve and to the return line; and
**characterized in that** hydraulic cooler pressure isolation circuit comprises:
a drain line (208, 208a, 208b) operatively in fluid communication with the supply line and the return line for connecting to the reservoir of the harvester;
a return valve (250, 250a, 250b) hydraulically connected to the return line downstream the hydraulic fluid cooler; and
a second valve (220, 220a, 220b) hydraulically connected to the return line downstream the hydraulic fluid cooler and upstream the return valve and operatively in fluid communication with the drain line; and
further **characterized in that** the bypass valve is hydraulically connected to the return line downstream the return valve.

2. The hydraulic cooler pressure isolation circuit of claim 1, wherein the bypass valve (260, 260a, 260b) is configured to open when the first valve (210, 210a, 210b) closes.

3. The hydraulic cooler pressure isolation circuit of any of claims 1 or 2, wherein the second valve (220, 220a, 220b) is configured to open at a back pressure in the return line (207, 207a, 207b) that exceeds a predetermined value.

4. The hydraulic cooler pressure isolation circuit of any of claims 1-3, wherein, during normal operation of the circuit, the first valve (210, 210a, 210b) and the return valve (250, 250a, 250b) are open, and the bypass valve (260, 260a, 260b) and the second valve (220, 220a, 220b) are closed, whereby hydraulic fluid passes through the supply line (206, 206a, 206b) from the pump (204, 204a, 204b), through the first valve to the hydraulic fluid cooler (270, 270a, 270b) and passes through the return line (207, 207a, 207b) from the hydraulic fluid cooler through the return valve to the reservoir (202, 202a, 202b).

5. The hydraulic cooler pressure isolation circuit of claim 4, wherein, during operation of the circuit isolating the hydraulic fluid cooler from high pressure hydraulic fluid, the circuit operates according to the following steps:
(1) the first valve (210, 210a, 210b) closes, the bypass valve (260, 260a, 260b) opens, and the return valve (250, 250a, 250b) closes, whereby hydraulic fluid bypasses the hydraulic fluid cooler (270, 270a, 270b) through the open bypass valve and the return line (207, 207a, 207b) downstream the closed return valve and flows to the reservoir (202, 202a, 202b); and
(2) the second valve (220, 220a, 220b) opens after the first valve 210 closes, whereby high pressure hydraulic fluid within the hydraulic fluid cooler is directed through the open second valve, passes through the drain line (208, 208a, 208b) and flows to the reservoir.

6. The hydraulic cooler pressure isolation circuit of claim 1, further comprising:
a pressure valve (230a) hydraulically connected to the drain line (208a) and operatively in fluid communication with the first valve (210a); and
a third valve (240a) operatively in fluid communication with the first valve, the bypass valve (260a), the second valve (220a) and the pressure valve.

7. The hydraulic cooler pressure isolation circuit of claim 6, wherein the first valve (210a) is configured to close based on a spring setting of the first valve and a spring setting of the pressure valve (230a).

8. The hydraulic cooler pressure isolation circuit of any of claims 6 or 7, wherein the first valve (210a) and the second valve (220a) are two-position, two-port spool valves.

9. The hydraulic cooler pressure isolation circuit of any of claims 6-8, wherein the bypass valve (260a) and the pressure valve (230a) are differential pressure relief valves.

10. The hydraulic cooler pressure isolation circuit of any of claims 6-9, wherein the return valve (250a) is a check valve.

11. The hydraulic cooler pressure isolation circuit of any of claims 6-10, wherein the third valve (240a) is an orifice valve.

12. The hydraulic cooler pressure isolation circuit of any of claims 6-11, wherein, during normal operation of the circuit, the first valve (210a), the return valve (250a) and the third valve (240a) are open, and the bypass valve (260a), the pressure valve (230a) and the second valve (220a) are closed, whereby hydraulic fluid passes through the supply line (206a) from the pump (204a), through the first valve to the hydraulic fluid cooler (270a) and passes through the return line (207a) from the hydraulic fluid cooler through the return valve to the reservoir.

13. The hydraulic cooler pressure isolation circuit of claim 12, wherein, during operation of the circuit isolating the hydraulic fluid cooler from high pressure hydraulic fluid, the circuit operates according to the following steps:
(1) the third valve (240a) remains open, the first valve (210a) closes, the bypass valve (260a) opens, the pressure valve (230a) opens and the return valve (250a) closes, whereby hydraulic fluid bypasses the hydraulic fluid cooler (270a) through:
(a) the open bypass valve and the return line downstream the closed return valve and flows to the reservoir (202a), and
(b) the pressure valve into the drain line whereupon it flows to the reservoir; and
(2) the second valve (220a) opens at a higher pilot pressure than the threshold pilot pressure that closes the first valve, whereby high pressure hydraulic fluid within the hydraulic fluid cooler is directed through the open second valve, passes through the drain line and flows to the reservoir.

14. The hydraulic cooler pressure isolation circuit of any of claims 1-5, wherein the first and second valves (210b, 220b) are spring-biased solenoid valves.

15. The hydraulic cooler pressure isolation circuit of claim 14, further comprising:
a temperature sensor (240b) for sensing a temperature of hydraulic fluid in the supply line (206b); and
a pressure sensor (230b) for sensing pressure in the return line (207b).

16. The hydraulic cooler pressure isolation circuit of claim 15, further comprising:
an electronic control unit (300) for powering the first and second spring-biased solenoid valves (210b, 220b) in response to signals provided by the temperature sensor (240b) and the pressure sensor (230b).

17. The hydraulic pressure isolation circuit of claim 16, wherein, during normal operation of the circuit, the first valve (210b) and the return valve (250b) are open, and the bypass valve (260b) and the second valve (220b) are closed, whereby hydraulic fluid passes through the supply line (206b) from the pump (204b), through the first valve to the hydraulic fluid cooler (270b) and passes through the return line (207b) from the hydraulic fluid cooler through the return valve to the reservoir (202b).

18. The hydraulic pressure isolation circuit of claim 17, wherein, when transitioning from normal operation of the circuit to isolating the hydraulic fluid cooler in the circuit, the first valve (210b) shifts to a closed position before the second valve (220b) shifts to an open position under control of the electronic control unit (300); and, when transitioning from isolating the hydraulic cooler in the circuit to normal operation of the circuit, the second valve shifts to a closed position before the first valve shifts to an open position under control of the electronic control unit.

19. An agricultural harvester (100) comprising:
a header (102) including the hydraulic cooler pressure isolation circuit (200, 200A, 200B) of claim 1;
a reservoir (202, 202a, 202b) for holding hydraulic fluid; and
a pump (204, 204a, 204b) operatively connected to the reservoir.

## Patentansprüche

1. Druckisolationskreislauf (200, 200A, 200B) eines Hydraulikkühlers für einen Erntevorsatz (102) einer landwirtschaftlichen Erntemaschine (100), die mit einem Hydraulikfluidtank (202, 202a, 202b) und einer Pumpeinrichtung (204, 204a, 204b) ausgestattet ist, wobei der Druckisolationskreislauf des Hydraulikkühlers umfasst:
einen Hydraulikfluidkühler (270, 270a, 270b);
eine Vorlaufleitung (206, 206a, 206b), die sich von dem Hydraulikfluidkühler erstreckt, um mit der Pumpeinrichtung der Erntemaschine verbunden zu sein;
eine Rücklaufleitung (207, 207a, 207b), die sich von dem Hydraulikfluidkühler erstreckt, um mit dem Hydraulikfluidtank der Erntemaschine verbunden zu sein;
ein erstes Ventil (210, 210a, 210b), das stromauf von dem Hydraulikfluidkühler mit der Vorlaufleitung hydraulisch verbunden ist;
ein Bypass-Ventil (260, 260a, 260b), das stromauf von dem ersten Ventil mit der Vorlaufleitung und mit der Rücklaufleitung hydraulisch verbunden ist; und
**dadurch gekennzeichnet, dass**
der Druckisolationskreislauf des Hydraulikkühlers umfasst:
eine Ablaufleitung (208, 208a, 208b), die mit der Vorlaufleitung und der Rücklaufleitung wirkend in Fluidverbindung steht, um mit dem Hydraulikfluidtank der Erntemaschine verbunden zu sein;
ein Rückflussventil (250, 250a, 250b), das stromab von dem Hydraulikfluidkühler mit der Rücklaufleitung hydraulisch verbunden ist; und
ein zweites Ventil (220, 220a, 220b), das mit der Rücklaufleitung stromab von dem Hydraulikfluidkühler und stromauf von dem Rückflussventil hydraulisch verbunden ist und mit der Ablaufleitung wirkend in Fluidverbindung steht; und
weiterhin **dadurch gekennzeichnet, dass**
das Bypass-Ventil stromab von dem Rückflussventil mit der Rücklaufleitung hydraulisch verbunden ist.

2. Druckisolationskreislauf eines Hydraulikkühlers nach Anspruch 1, wobei das Bypass-Ventil (260, 260a, 260b) dazu eingerichtet ist, zu öffnen, wenn das erste Ventil (210, 210a, 210b) schließt.

3. Druckisolationskreislauf eines Hydraulikkühlers nach einem der Ansprüche 1 oder 2, wobei das zweite Ventil (220, 220a, 220b) dazu eingerichtet ist, bei einem Rücklaufdruck in der Rücklaufleitung (207, 207a, 207b) zu öffnen, der einen vorbestimmten Wert übersteigt.

4. Druckisolationskreislauf eines Hydraulikkühlers nach einem der Ansprüche 1 bis 3, wobei, während des Normalbetriebs des Druckisolationskreislaufs, das erste Ventil (210, 210a, 210b) und das Rückflussventil (250, 250a, 250b) offen sind, und das Bypass-Ventil (260, 260a, 260b) und das zweite Ventil (220, 220a, 220b) geschlossen sind, sodass Hydraulikfluid von der Pumpeinrichtung (204, 204a, 204b) durch die Vorlaufleitung (206, 206a, 206b) strömt, durch das erste Ventil zum Hydraulikfluidkühler (270, 270a, 270b) strömt, und von dem Hydraulikfluidkühler durch die Rücklaufleitung (207, 207a, 207b) durch das Rückflussventil zum Hydraulikfluidtank (202, 202a, 202b) strömt.

5. Druckisolationskreislauf eines Hydraulikkühlers nach Anspruch 4, wobei, während des Betriebs des Druckisolationskreislaufs, bei dem der Hydraulikfluidkühler von druckbeaufschlagtem Hydraulikfluid isoliert wird, der Druckisolationskreislauf die folgenden Schritte ausführt:
(1) das erste Ventil (210, 210a, 210b) schließt, das Bypass-Ventil (260, 260a, 260b) öffnet, und das Rückflussventil (250, 250a, 250b) schließt, sodass Hydraulikfluid an dem Hydraulikfluidkühler (270, 270a, 270b) vorbei durch das offene Bypass-Ventil und die Rücklaufleitung (207, 207a, 207b) stromab von dem geschlossenen Rückflussventil strömt und zum Hydraulikfluidtank (202, 202a, 202b) fließt; und
(2) das zweite Ventil (220, 220a, 220b) öffnet, nachdem das erste Ventil 210 schließt, sodass druckbeaufschlagtes Hydraulikfluid in dem Hydraulikfluidkühler durch das offene zweite Ventil geleitet wird, durch die Ablaufleitung (208, 208a, 208b) strömt und zu dem Hydraulikfluidtank fließt.

6. Druckisolationskreislauf eines Hydraulikkühlers nach Anspruch 1, das des Weiteren umfasst:
ein Druckventil (230a), das mit der Ablaufleitung (208a) hydraulisch verbunden ist und mit dem ersten Ventil (210a) wirkend in Fluidverbindung steht; und
ein drittes Ventil (240a), das mit dem ersten Ventil, dem Bypass-Ventil (260a), dem zweiten Ventil (220a) und dem Druckventil wirkend in Fluidverbindung steht.

7. Druckisolationskreislauf eines Hydraulikkühlers nach Anspruch 6, wobei das erste Ventil (210a) dazu eingerichtet ist, basierend auf einer Federeinstellung des ersten Ventils und einer Federeinstellung des Druckventils (230a) zu schließen.

8. Druckisolationskreislauf eines Hydraulikkühlers nach einem der Ansprüche 6 oder 7, wobei das erste Ventil (210a) und das zweite Ventil (220a) als Zwei-Positionen-Zwei-Wege-Schieberventile ausgeführt sind.

9. Druckisolationskreislauf eines Hydraulikkühlers nach einem der Ansprüche 6 bis 8, wobei das Bypass-Ventil (260a) und das Druckventil (230a) als Differenzdruck-Entlastungsventile ausgeführt sind.

10. Druckisolationskreislauf eines Hydraulikkühlers nach einem der Ansprüche 6 bis 9, wobei das Rückflussventil (250a) ein Rückschlagventil ist.

11. Druckisolationskreislauf eines Hydraulikkühlers nach einem der Ansprüche 6 bis 10, wobei das dritte Ventil (240a) ein Blendenventil ist.

12. Druckisolationskreislauf eines Hydraulikkühlers nach einem der Ansprüche 6 bis 11, wobei während des Normalbetriebs des Druckisolationskreislaufs, das erste Ventil (210a), das Rückflussventil (250a) und das dritte Ventil (240a) offen sind, und das Bypass-Ventil (260a), das Druckventil (230a) und das zweite Ventil (240a) geschlossen sind, sodass Hydraulikfluid von der Pumpeinrichtung (204a) durch die Zulaufleitung (206a) durch das erste Ventil zum Hydraulikfluidkühler (270a) strömt und von dem Hydraulikfluidkühler durch die Rücklaufleitung (207a) durch das Rückflussventil zum Hydraulikfluidtank strömt.

13. Druckisolationskreislauf eines Hydraulikkühlers nach Anspruch 12, wobei während des Betriebs des Druckisolationskreislaufs, bei dem der Hydraulikfluidkühler von druckbeaufschlagtem Hydraulikfluid isoliert wird, der Druckisolationskreislauf die folgenden Schritte ausführt:
(1) das dritte Ventil (240a) bleibt offen, das erste Ventil (210a) schließt, das Bypass-Ventil (260a) öffnet, das Druckventil (230a) öffnet und das Rückflussventil (250a) schließt, sodass Hydraulikfluid an dem Hydraulikfluidkühler (270a) vorbeiströmt durch:
(a) das offene Bypass-Ventil und die Rücklaufleitung stromab von dem geschlossenen Rückflussventil und strömt zum Hydraulikfluidtank (202a), und
(b) das Druckventil in die Ablaufleitung, sodass es zum Hydraulikfluidtank fließt; und
(2) das zweite Ventil (220a) öffnet bei einem höheren Vorsteuerdruck als der Vorsteuerdruck-Schwellenwert, der das erste Ventil schließt, sodass druckbeaufschlagtes Hydraulikfluid in dem Hydraulikfluidkühler durch das offene zweite Ventil geleitet wird, durch die Ablaufleitung strömt und zum Hydraulikfluidtank fließt.

14. Druckisolationskreislauf eines Hydraulikkühlers nach einem der Ansprüche 1 bis 5, wobei das erste und das zweite Ventil (210b, 220b) federvorgespannte Magnetventile sind.

15. Druckisolationskreislauf eines Hydraulikkühlers nach Anspruch 14, das des Weiteren aufweist:
einen Temperatursensor (240b) zum Erfassen einer Hydraulikfluid-Temperatur in der Zulaufleitung (206b); und
einen Drucksensor (230b) zum Erfassen eines Drucks in der Rücklaufleitung (207b).

16. Druckisolationskreislauf eines Hydraulikkühlers nach Anspruch 15, das des Weiteren aufweist:
eine elektrische Steuereinheit (300), um das erste und das zweite federvorgespannte Magnetventil (210b, 220b) in Reaktion auf Signale mit Energie zu versorgen, die von dem Temperatursensor (240b) und dem Drucksensor (230b) bereitgestellt werden.

17. Druckisolationskreislauf eines Hydraulikkühlers nach Anspruch 16, wobei während des Normalbetriebs des Druckisolationskreislaufs das erste Ventil (210b) und das Rückflussventil (250b) offen sind, und das Bypass-Ventil (260b) und das zweite Ventil (220b) geschlossen sind, sodass Hydraulikfluid von der Pumpeinrichtung (204b) durch die Zulaufleitung (206b) durch das erste Ventil zum Hydraulikfluidkühler (270b) strömt und von dem Hydraulikfluidkühler durch die Rücklaufleitung (207b) durch das Rückflussventil zum Hydraulikfluidtank (202b) strömt.

18. Druckisolationskreislauf eines Hydraulikkühlers nach Anspruch 17, wobei, wenn ein Übergang von dem Normalbetrieb des Druckisolationskreislaufs in die Isolation des Hydraulikfluidkühlers in dem Druckisolationskreislaufs erfolgt, das erste Ventil (210b) in eine geschlossene Position wechselt, bevor das zweite Ventil (220b) unter Steuerung durch die elektronische Steuereinheit (300) in eine offene Position wechselt; und wenn ein Übergang von der Isolation des Hydraulikfluidkühlers in dem Druckisolationskreislauf in den Normalbetrieb des Druckisolationskreislaufs erfolgt, das zweite Ventil in eine geschlossene Position wechselt, bevor das erste Ventil unter Steuerung durch die elektronische Steuereinheit in eine offene Position wechselt.

19. Landwirtschaftliche Erntemaschine (100) mit:
einem Erntevorsatz (102) mit dem Druckisolationskreislauf (200, 200A, 200B) für einen Hydraulikkühler nach Anspruch 1;
einem Hydraulikfluidtank (202, 202a, 202b) zum Aufnehmen von Hydraulikfluid; und
einer Pumpeinrichtung (204, 204a, 204b), die mit dem Hydraulikfluidtank in Wirkverbindung steht.

## Revendications

1. Un circuit d'isolation de pression de refroidisseur hydraulique (200, 200A, 200B) pour un organe de coupe (102) d'une moissonneuse agricole (100) équipée d'un réservoir de fluide hydraulique (202, 202a, 202b) et d'une pompe (204, 204a, 204b), le circuit d'isolation de pression de refroidisseur hydraulique comprenant :
un refroidisseur de fluide hydraulique (270, 270a, 270b) ;
une conduite d'alimentation (206, 206a, 206b) s'étendant du refroidisseur de fluide hydraulique pour le raccordement à la pompe de la moissonneuse ;
une conduite de retour (207, 207a, 207b) s'étendant du refroidisseur de fluide hydraulique pour le raccordement au réservoir de la moissonneuse ;
une première vanne (210, 210a, 210b) raccordée hydrauliquement à la conduite d'alimentation en amont du refroidisseur de fluide hydraulique ;
une vanne de dérivation (260, 260a, 260b) raccordée hydrauliquement à la conduite d'alimentation en amont de la première vanne et à la conduite de retour ; et
**caractérisé en ce que**
le circuit d'isolation de pression de refroidisseur hydraulique comprend :
une conduite de vidange (208, 208a, 208b) fonctionnant en communication fluidique avec la conduite d'alimentation et la conduite de retour pour le raccordement au réservoir de la moissonneuse ;
une vanne de retour (250, 250a, 250b) raccordée hydrauliquement à la conduite de retour en aval du refroidisseur de fluide hydraulique ; et
une deuxième vanne (220, 220a, 220b) raccordée hydrauliquement à la conduite de retour en aval du refroidisseur de fluide hydraulique et en amont de la vanne de retour, et fonctionnellement en communication fluidique avec la conduite de vidange ; et
**caractérisé en outre en ce que**
la vanne de dérivation est hydrauliquement raccordée à la conduite de retour en aval de la vanne de retour.

2. Le circuit d'isolation de pression de refroidisseur hydraulique selon la revendication 1, dans lequel la vanne de dérivation (260, 260a, 260b) est configurée pour s'ouvrir lorsque la première vanne (210, 210a, 210b) se ferme.

3. Le circuit d'isolation de pression de refroidisseur hydraulique selon l'une quelconque de la revendication 1 ou de la revendication 2, dans lequel la deuxième vanne (220, 220a, 220b) est configurée pour s'ouvrir à une contre-pression dans la conduite de retour (207, 207a, 207b) qui excède une valeur prédéterminée.

4. Le circuit d'isolation de pression de refroidisseur hydraulique selon l'une quelconque des revendications 1 à 3, dans lequel, pendant le fonctionnement normal du circuit, la première vanne (210, 210a, 210b) et la vanne de retour (250, 250a, 250b) sont ouvertes, et la vanne de dérivation (260, 260a, 260b) et la deuxième vanne (220, 220a, 220b) sont fermées, moyennant quoi le fluide hydraulique s'écoule dans la conduite d'alimentation (206, 206a, 206b) depuis la pompe (204, 204a, 204b), en passant par la première vanne jusqu'au refroidisseur de fluide hydraulique (270, 270a, 270b) et s'écoule par la conduite de retour (207, 207a, 207b) depuis le refroidisseur de fluide hydraulique en passant par la vanne de retour jusqu'au réservoir (202, 202a, 202b).

5. Le circuit d'isolation de pression de refroidisseur hydraulique selon la revendication 4, dans lequel, pendant le fonctionnement du circuit d'isolation du refroidisseur de fluide hydraulique du fluide hydraulique à haute pression, le circuit fonctionne selon les étapes suivantes :
(1) la première vanne (210, 210a, 210b) se ferme, la vanne de dérivation (260, 260a, 260b) s'ouvre et la vanne de retour (250, 250a, 250b) se ferme, moyennant quoi le fluide hydraulique contourne le refroidisseur de fluide hydraulique (270, 270a, 270b) par la vanne de dérivation ouverte et la conduite de retour (207, 207a, 207b) en aval de la vanne de retour fermée et s'écoule jusqu'au réservoir (202, 202a, 202b) ; et
(2) la deuxième vanne (220, 220a, 220b) s'ouvre après la fermeture de la première vanne (210), moyennant quoi le fluide hydraulique à haute pression à l'intérieur du refroidisseur de fluide hydraulique est dirigé à travers la deuxième vanne ouverte, traverse la conduite de vidange (208, 208a, 208b) et s'écoule jusqu'au réservoir.

6. Le circuit d'isolation de pression de refroidisseur hydraulique selon la revendication 1, comprenant en outre :
une soupape de pression (230a) raccordée hydrauliquement à la conduite de vidange (208a) et fonctionnellement en communication fluidique avec la première vanne (210a) ; et
une troisième vanne (240a) fonctionnellement en communication fluidique avec la première vanne, la vanne de dérivation (260a), la deuxième vanne (220a) et la soupape de pression.

7. Le circuit d'isolation de pression de refroidisseur hydraulique selon la revendication 6, dans lequel la première vanne (210a) est configurée pour se fermer en fonction d'un réglage de ressort de la première vanne et d'un réglage de ressort de la soupape de pression (230a).

8. Le circuit d'isolation de pression de refroidisseur hydraulique selon l'une quelconque de la revendication 6 ou de la revendication 7, dans lequel la première vanne (210a) et la deuxième vanne (220a) sont des distributeurs à tiroir à deux positions et à deux orifices.

9. Le circuit d'isolation de pression de refroidisseur hydraulique selon l'une quelconque des revendications 6 à 8, dans lequel la vanne de dérivation (260a) et la soupape de pression (230a) sont des soupapes de décharge différentielle.

10. Le circuit d'isolation de pression de refroidisseur hydraulique selon l'une quelconque des revendications 6 à 9, dans lequel la vanne de retour (250a) est un clapet anti-retour.

11. Le circuit d'isolation de pression de refroidisseur hydraulique selon l'une quelconque des revendications 6 à 10, dans lequel la troisième vanne (240a) est une vanne à orifice.

12. Le circuit d'isolation de pression de refroidisseur hydraulique selon l'une quelconque des revendications 6 à 11, dans lequel, pendant le fonctionnement normal du circuit, la première vanne (210a), la vanne de retour (250a) et la troisième vanne (240a) sont ouvertes, et la vanne de dérivation (260a), la soupape de pression (230a) et la deuxième vanne (220a) sont fermées, moyennant quoi le fluide hydraulique s'écoule dans la conduite d'alimentation (206a) depuis la pompe (204a), en passant par la première vanne jusqu'au refroidisseur de fluide hydraulique (270a) et s'écoule par la conduite de retour (207a) depuis le refroidisseur de fluide hydraulique en passant par la vanne de retour jusqu'au réservoir.

13. Le circuit d'isolation de pression de refroidisseur hydraulique selon la revendication 12, dans lequel, pendant le fonctionnement du circuit d'isolation du refroidisseur de fluide hydraulique du fluide hydraulique à haute pression, le circuit fonctionne selon les étapes suivantes :
(1) la troisième vanne (240a) reste ouverte, la première vanne (210a) se ferme, la vanne de dérivation (260a) s'ouvre, la soupape de pression (230a) s'ouvre et la vanne de retour (250a) se ferme, moyennant quoi le fluide hydraulique contourne le refroidisseur de fluide hydraulique (270a) par :
(a) la vanne de dérivation ouverte et la conduite de retour en aval de la vanne de retour fermée et s'écoule jusqu'au réservoir (202a), et
(b) la soupape de pression dans la conduite de vidange, après quoi il s'écoule jusqu'au réservoir ; et
(2) la deuxième vanne (220a) s'ouvre à une pression pilote plus élevée que la pression pilote seuil qui ferme la première vanne, moyennant quoi le fluide hydraulique à haute pression à l'intérieur du refroidisseur de fluide hydraulique est dirigé à travers la deuxième vanne ouverte, traverse la conduite de vidange et s'écoule jusqu'au réservoir.

14. Le circuit d'isolation de pression de refroidisseur hydraulique selon l'une quelconque des revendications 1 à 5, dans lequel la première et la deuxième vanne (210b, 220b) sont des électrovannes à ressort.

15. Le circuit d'isolation de pression de refroidisseur hydraulique selon la revendication 14, comprenant en outre :
un capteur de température (240b) pour détecter une température de fluide hydraulique dans la conduite d'alimentation (206b) ; et
un capteur de pression (230b) pour détecter la pression dans la conduite de retour (207b).

16. Le circuit d'isolation de pression de refroidisseur hydraulique selon la revendication 15, comprenant en outre :
une unité de commande électronique (300) pour alimenter la première et la seconde électrovanne à ressort (210b, 220b) en réponse aux signaux fournis par le capteur de température (240b) et le capteur de pression (230b).

17. Le circuit d'isolation de pression hydraulique selon la revendication 16, dans lequel, pendant le fonctionnement normal du circuit, la première vanne (210b) et la vanne de retour (250b) sont ouvertes, et la vanne de dérivation (260b) et la deuxième vanne (220b) sont fermées, moyennant quoi le fluide hydraulique s'écoule dans la conduite d'alimentation (206b) depuis la pompe (204b), en passant par la première vanne jusqu'au refroidisseur de fluide hydraulique (270b) et s'écoule par la conduite de retour (207b) depuis le refroidisseur de fluide hydraulique en passant par la vanne de retour jusqu'au réservoir (202b).

18. Le circuit d'isolation de pression hydraulique selon la revendication 17, dans lequel, lors de la transition du fonctionnement normal du circuit à l'isolation du refroidisseur de fluide hydraulique dans le circuit, la première vanne (210b) bascule en position fermée avant que la deuxième vanne (220b) bascule en position ouverte sous le contrôle de l'unité de commande électronique (300) ; et, lors de la transition de l'isolation du refroidisseur hydraulique dans le circuit au fonctionnement normal du circuit, la deuxième vanne bascule en position fermée avant que la première vanne bascule en position ouverte sous le contrôle de l'unité de commande électronique.

19. Une moissonneuse agricole (100) comprenant :
un organe de coupe (102) comprenant le circuit d'isolation de pression de refroidisseur hydraulique (200, 200A, 200B) selon la revendication 1 ;
un réservoir (202, 202a, 202b) pour contenir le fluide hydraulique ; et
une pompe (204, 204a, 204b) raccordée fonctionnellement au réservoir.
